# FASCICULE DE BREVET EUROPEEN

(11) **EP 2 611 686 B1**
(45) Date de publication et mention de la délivrance du brevet: **21.05.2014**
(21) Numéro de dépôt: 11764834.5
(22) Date de dépôt: 02.09.2011
(51) Int. Cl.: B63C 11/46, B63C 11/48

(54) **DISPOSITIF MOBILE SOUS-MARIN D'ENREGISTREMENT D'IMAGES**
MOBILE UNTERWASSERBILDAUFZEICHNUNGSVORRICHTUNG
MOBILE IMAGE-RECORDING UNDERWATER DEVICE

(30) Priorité: 03.09.2010 FR 1057025
(43) Date de publication de la demande: 10.07.2013
(73) Titulaire: Institut De Recherche Pour Le Développement (IRD), 13002 Marseille 2 (FR)
(72) Inventeur: PONTON, Dominique, F-98800 Nouméa Nouvelle-Calédonie (FR); CORNUBERT, Ondine, F-13007 Marseille (FR)
(74) Mandataire: Cabinet Plasseraud
(86) Numéro de dépôt international: PCT/FR2011/052010
(87) Numéro de publication internationale: WO 2012/089951

(56) Documents cités:
- FR-A1- 2 914 196
- US-A- 4 914 460
- US-A- 5 142 299

## Description

La présente invention est relative aux dispositifs sous-marins d'enregistrement d'images.

La présente invention concerne plus particulièrement un dispositif sous-marin de propulsion et de capture d'images comprenant :
- un propulseur hydrodynamique muni de poignées adaptées pour recevoir les mains d'un plongeur, le propulseur étant adapté pour propulser le dispositif selon un axe de propulsion,
- un support lié à une portion inférieure dudit propulseur hydrodynamique, décalé de l'axe de propulsion,
- un appareil de capture d'images, par exemple un appareil photo numérique, fixé au dit support, et dirigé vers le fond sous-marin en position normale d'utilisation.

Le document FR2914196 est considéré comme l'état de la technique le plus proche de l'objet de la revendication 1 et décrit un tel dispositif sous-marin. Mais la distance au fond n'est ni connue ni maîtrisée, et les images ou clichés ne peuvent pas être exploitées précisément.

La présente invention a notamment pour but d'améliorer les dispositifs destinés à l'observation de l'habitat benthique et a pour but de pallier les inconvénients de l'art antérieur.

La présente invention a pour objet un dispositif sous-marin d'enregistrement d'images caractérisé en ce que ledit support est équipé d'au moins deux générateurs de faisceau lasers dirigés vers le champ de capture dudit appareil de capture d'images, chaque générateur étant adapté pour générer un rayon laser produisant une tache lumineuse sur le fond sous-marin.

Grâce à ces dispositions, des taches lumineuses sont générées sur le fond marin et constituent des repères pour calibrer et/ou exploiter les clichés. De plus ces taches lumineuses peuvent aider le plongeur qui pilote le dispositif pour le guidage de celui-ci.

Dans divers modes de réalisation de l'invention, on peut éventuellement avoir recours en outre à l'une et/ou à l'autre des dispositions suivantes, prises isolément ou en combinaison:
- le support comprend une base fixée solidairement au propulseur hydrodynamique, et un cadre auxiliaire inclinable supporté par la base et articulé par rapport à ladite base, et un second appareil de capture d'images est fixé sur le cadre auxiliaire inclinable;
- les au moins deux générateurs de faisceau laser émettent des rayons lasers parallèles entre eux espacées d'une distance prédéterminée ; moyennant quoi les tâches lumineuses qu'ils produisent au contact du fond visibles sur les clichés permettent de définir l'échelle, la correction d'échelle et la calibration à appliquer au cliché ;
- le dispositif comporte quatre générateurs de faisceau laser ;
- les au moins deux des générateurs de faisceau laser émettent des faisceaux lasers convergents vers le bas, espacés angulairement d'un angle prédéterminé, pour se croiser à une distance prédéterminée du support ; moyennant quoi la position des taches lumineuses aident le plongeur à maintenir une distance sensiblement constante par rapport au fond ;
- les rayons laser ont des couleurs différentes ;
- les taches lumineuses ont des formes différentes ;
- le dispositif comporte des moyens de propulsion à vitesse réglable et la vitesse d'avancement du dispositif est réglable au moyen d'un actuateur de contrôle ;
- le dispositif comporte une unité de mesure de position GPS ;
- le dispositif comporte une unité de déclenchement adaptée pour déclencher la prise de clichés automatiquement selon une chronologie prédéterminée ou à intervalles de temps réguliers.

D'autres aspects, buts et avantages de l'invention apparaîtront à la lecture de la description suivante de deux modes de réalisation de l'invention, donnés à titre d'exemples non limitatifs. L'invention sera également mieux comprise en regard des dessins joints sur lesquels :
- la figure 1 est une vue générale montrant un dispositif vidéo sous-marin utilisé par un plongeur selon un premier mode de réalisation de l'invention,
- la figure 2 représente une vue de dessous du dispositif de la Figure 1,
- la figure 3 représente une vue axiale du dispositif de la Figure 1,
- la figure 4 représente une vue de dessus du dispositif selon un deuxième mode de réalisation,
- la figure 5 représente une vue de côté du dispositif de la Figure 4,
- la figure 6 montre le dispositif de la Figure 4 utilisé par un plongeur,
- les figures 7 et 8 montrent d'autres configurations d'utilisation du dispositif de la Figure 4, et
- la figure 9 représente un exemple des taches de lumières générées par le dispositif de la Figure 4.

Sur les différentes figures, les mêmes références désignent des éléments identiques ou similaires.

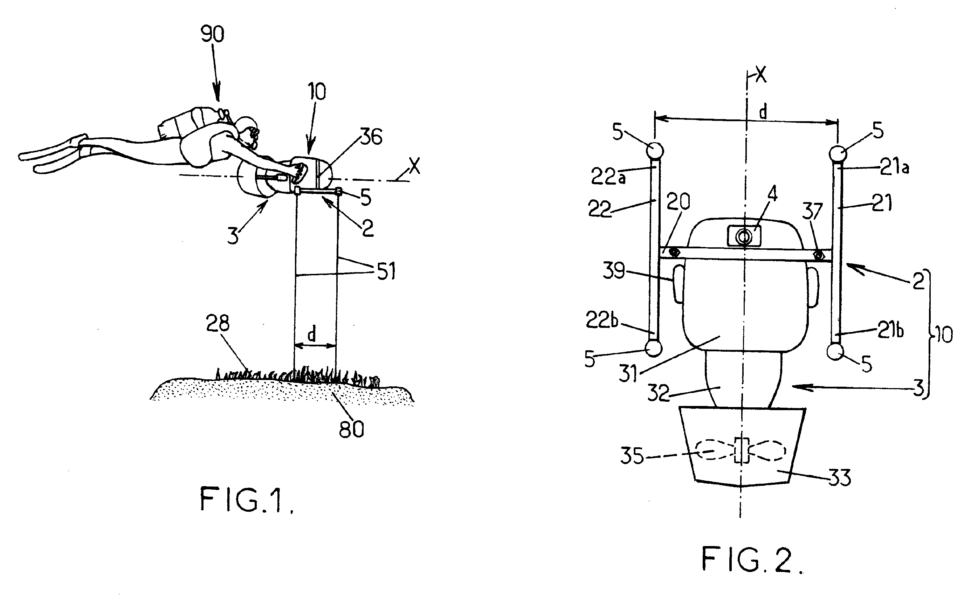

La figure 1 présente un dispositif vidéo sous-marin 10 utilisé par un plongeur 90 selon un premier mode de réalisation de l'invention.

Le but de ce dispositif vidéo est d'enregistrer des images de la faune et la flore qui se trouvent sur les fonds marins, ce qui est aussi appelé 'faune et flore benthique'. Un plongeur équipé d'un appareillage spécial parcourt en plongée le fond sous-marin en se tenant à une distance modéré du fond et prend des clichés du fond, pour que ces clichés soient postérieurement exploités.

Selon un premier mode de réalisation de l'invention, illustré sur les figures 1 à 3, l'appareillage utilisé par le plongeur est un dispositif 10 de propulsion et de capture d'images d'un fond sous-marin 80 occupé par des éléments de flore et de faune 28, ledit dispositif 10 comprenant :
- un propulseur hydrodynamique 3 muni de poignées 39 adaptées pour recevoir les mains d'un plongeur 90 et auxquelles le plongeur peut s'arrimer, le propulseur 3 étant adapté pour propulser le dispositif selon un axe de propulsion X,
- un support 2 lié à une portion inférieure dudit propulseur hydrodynamique, décalé de l'axe de propulsion,
- un appareil de capture d'images 4, par exemple un appareil photo numérique 4 étanche ou enclos dans une enceinte étanche, ledit appareil 4 étant fixé au dit support 2, et ayant un champ de capture 49 dirigé vers le fond sous-marin en position normale d'utilisation.

Dans l'exemple représenté, le propulseur hydrodynamique 3 comprend un corps principal 31 de forme générale cylindrique, abritant la batterie d'accumulateurs électrique ainsi qu'un système de pilotage. De plus, le propulseur 3 comprend aussi un logement axial 32 renfermant un moteur électrique adapté pour entrainer en rotation une hélice ou propulseur 35 situé dans un carénage d'hélice 33.

Le support 2 se présente, dans l'exemple illustré, comme une structure légère en forme de 'H' avec une branche centrale 20 perpendiculaire à l'axe de propulsion X, et deux branches latérales 21, 22 perpendiculaires à la branche centrale 20. La première branche latérale 21 s'étend entre une première extrémité 21a et une deuxième extrémité 21b. A chacune de ces extrémités 21a, 21b est disposé avantageusement selon l'invention un générateur de faisceau laser 5 apte à générer un rayon laser 51. Ledit générateur de faisceau laser 5 est disposé de telle sorte que le rayon laser qui en est émis est perpendiculaire à l'axe de propulsion et à la branche centrale 20. Comme visible sur la Figure 1, en position normale d'utilisation, les rayons lasers 51 issus des générateurs 5 sont dirigés vers le fond sous-marin 80.

Dans l'exemple illustré, la deuxième branche latérale 22 est la symétrique de la première et s'étend entre une première extrémité 22a et une deuxième extrémité 22b. A chacune de ces extrémités 22a, 22b est également disposé de façon similaire un générateur de faisceau laser 5 apte à générer un rayon laser 51.

Selon le premier mode, les quatre rayons lasers 51 sont parallèles entre eux et sont disposés sensiblement en carré de coté 'd'.

Chacun de ces rayons laser 51 forme une tache lumineuse sur le fond sous-marin, ainsi quatre taches lumineuses en forme de carré de coté 'd' sont créées sur le fond sous-marin. Ces taches lumineuses servent de repère pour la calibration des clichés. Ce repère 'virtuel' remplace avantageusement le repère physique appelé 'photo quadrat', installé dans le champ d'un appareil photo.

Il est à noter que la calibration ou mise à l'échelle du cliché lors de son traitement ultérieur peut être réalisé avec la présence de deux faisceaux lasers 51 uniquement. En effet, la distance 'd' qui sépare les deux taches lumineuses se transforme sur le cliché en une distance résultante dont la valeur dépend directement de la distance entre l'objectif de l'appareil photo et le fond sous-marin. La calibration ou mise à l'échelle peut être ainsi réalisée. Dans le cas ou on utilise quatre taches lumineuses disposées en carré, cela peut servir à éliminer lors du traitement toutes les parties du clichés situées à l'extérieur du carré ('quadrat').

L'appareil de capture d'images 4 est installé sur la branche centrale 20 du support 2 et son objectif est dirigé radialement vers l'extérieur par rapport à l'axe de propulsion du dispositif. Il peut s'agir d'un appareil photo numérique classique ou d'un appareil grand angle aussi appelé 'fish-eye'.

De plus le support 2 est fixé au propulseur 3 au moyen d'une bride 36 qui entoure le corps principal et qui est mis en tension sur la branche centrale 20 par des moyens de fixation 37.

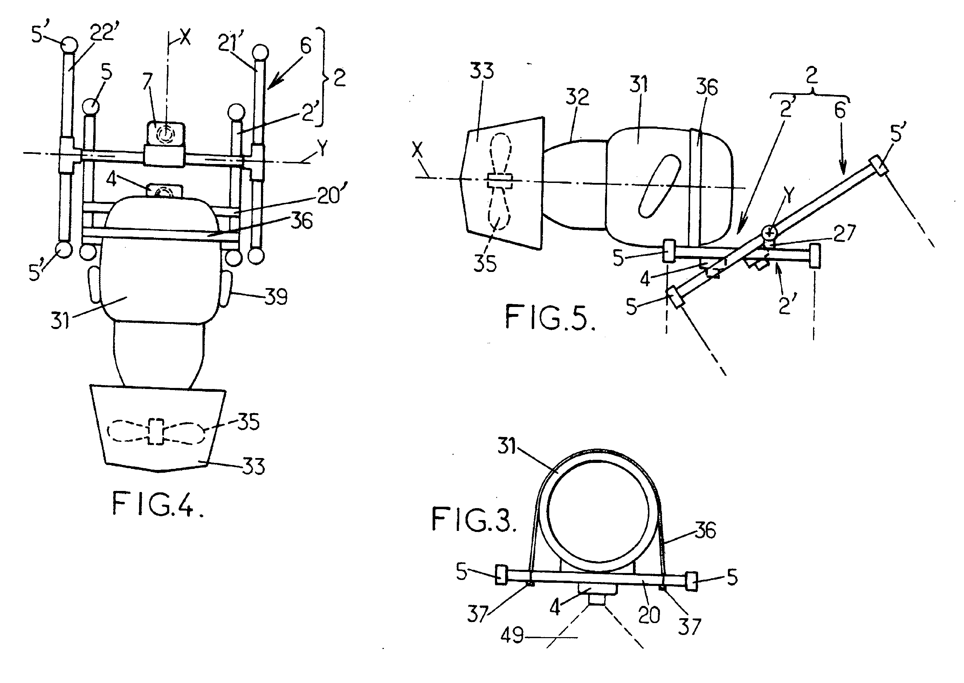

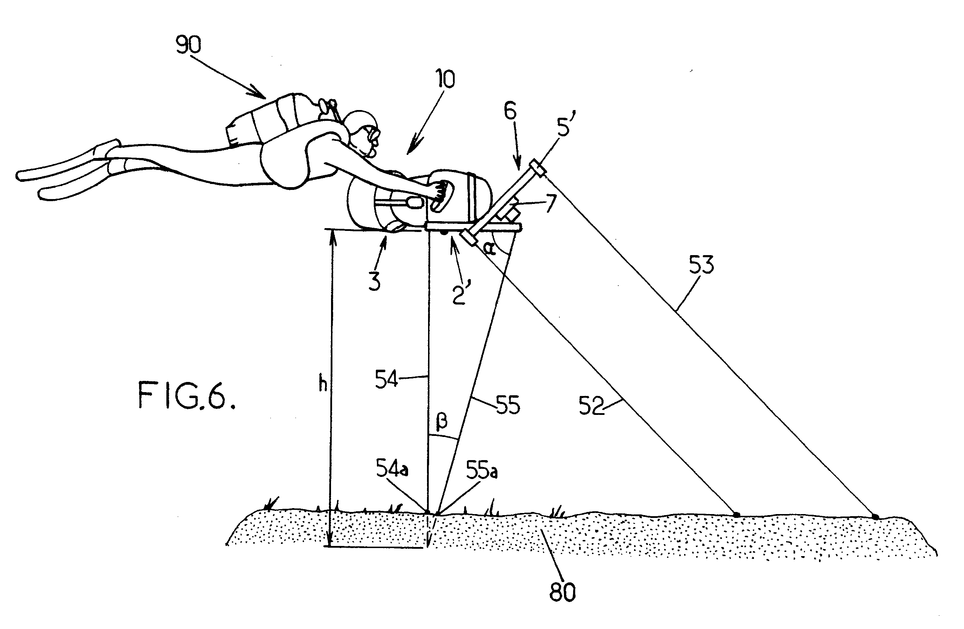

Les figures 4 à 9 montrent un deuxième mode de réalisation de l'invention.

Dans ce deuxième mode, le propulseur hydrodynamique 3 est identique ou similaire à celui déjà décrit pour le premier mode. Le support 2 quant à lui est différent et plus élaboré. Le support 2 comprend :
- une base 2' fixée solidairement au propulseur hydrodynamique 3 de façon similaire à ce qui a été décrit pour le premier mode,
- un cadre auxiliaire 6 inclinable supporté par la base 2' et articulé par rapport à ladite base 2'.

La base 2' est similaire au support 2 déjà décrit excepté le fait que la branche centrale 20' se situe plus en arrière par rapport à la direction de propulsion et le fait que chaque branche latérale de la base 2' supporte un palier d'articulation 27 apte à supporter le cadre auxiliaire 6, avec liaison à rotation autour de l'axe transverse Y.

Dans ce deuxième mode de réalisation, un second appareil de capture d'images 7 est fixé sur le cadre auxiliaire inclinable 6, et son objectif est également dirigé radialement vers l'extérieur par rapport à l'axe de propulsion du dispositif. Lorsque l'inclinaison du cadre auxiliaire 6 est nulle, l'objectif du second appareil de capture d'images 7 est dirigé verticalement vers le bas, mais si le cadre est incliné (cf. Fig. 5) alors l'objectif est dirigé en oblique vers le bas et vers l'avant.

Dans l'exemple illustré, le cadre auxiliaire 6 se présente comme une structure en forme de 'H' avec une branche centrale 20' reposant sur les paliers 27 et supportant le second appareil photo 7 et deux branches latérales 21',22' perpendiculaires à la branche centrale 20' et aux extrémités desquelles se trouvent des générateurs de faisceau laser 5', similaires aux générateurs de faisceau laser 5 déjà décrits pour le premier mode. Ces quatre générateurs 5' génèrent chacun un rayon laser 52,53 perpendiculairement au plan du cadre auxiliaire 6, générant ainsi des taches lumineuses sur le fond sous-marin en forme d'un 'quadrat' virtuel comme décrit précédemment dans le cas du premier mode.

En outre, dans le cas du deuxième mode de réalisation, les générateurs 5 de la base 2' sont disposés différemment de ce qui a déjà été décrit. Un générateur, en l'occurrence situé à l'extrémité arrière émet un premeir rayon laser 54 de référence perpendiculairement au plan de la base 2' alors qu'un deuxième générateur, en l'occurrence situé à l'extrémité avant émet un rayon laser 55 incliné, orienté d'un angle α par rapport au plan de la base 2', et donc décalé d'un angle β par rapport au rayon laser 54 de référence. Les deux rayons lasers 54,55 convergent l'un vers l'autre et sont disposés pour se croiser à une distance h du plan de la base 2'. Ces deux rayons lasers 54,55 heurtent le fond marin en y générant chacun une tache lumineuse 54a,55a.

Avantageusement, la position relative des taches lumineuses 54a,55a est utilisée par le plongeur 90 pour corriger sa position en hauteur par rapport à un objectif d'une trajectoire située à une hauteur 'h' du fond marin.

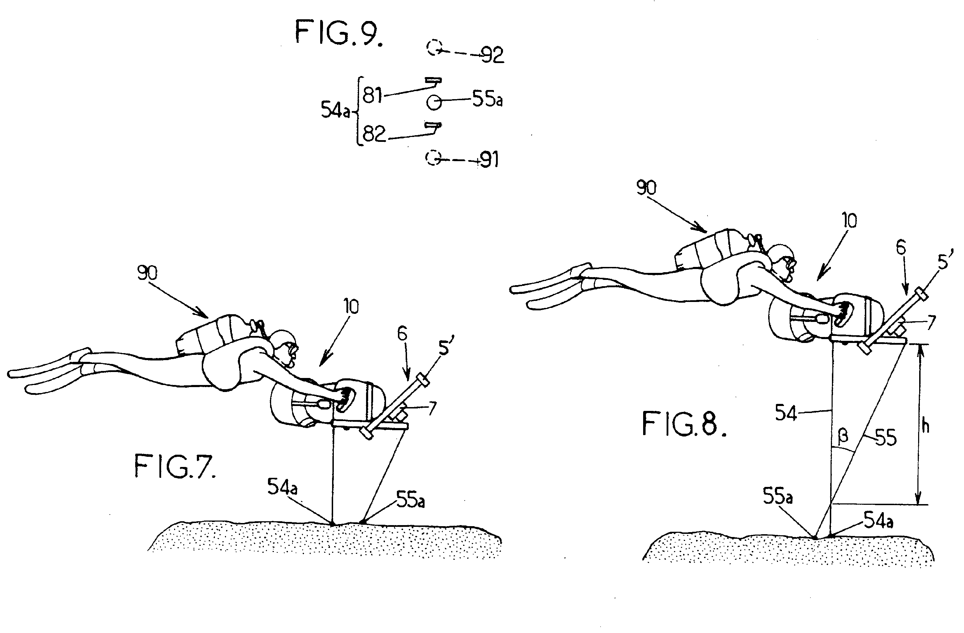

En l'occurrence, comme illustré sur la figure 7, si le plongeur navigue trop près du fond marin à une distance inférieure à h, alors la tache 55a est en avant de la tache de référence 54a.

A contrario, comme illustré sur la figure 8, si le plongeur navigue trop loin du fond marin à une distance supérieure à h, alors la tache 55a est en arrière de la de référence tache 54a.

Selon un autre aspect de l'invention, les deux taches lumineuses 54a,55a ont une couleur différente (par exemple jaune et rouge), de manière à ce que le plongeur identifie facilement quelle tache est devant l'autre et quelle correction de hauteur il doit entreprendre.

Outre la couleur, la forme des taches lumineuse peut être différente l'une de l'autre pour faciliter la lecture par le plongeur.

Par exemple, comme illustré sur la Figure 9, une des deux taches par exemple la première 54a peut représenter deux traits transversaux 81,82 d'une première couleur par exemple jaune foncé. La deuxième tache 55a a quant à elle la forme d'un point rouge ou pourpre. Si la distance au fond est correcte, la tache 55a se situe entre les deux traits transversaux 81,82. Si la distance est trop faible, la tache 55a est en avant (repère 92) par rapport aux traits transversaux 81,82, alors que, à contrario, si la distance est trop grande, la tache 55a est en arrière (repère 91) par rapport aux traits transversaux 81,82. Le plongeur a donc une indication très claire de la position actuelle et de la correction éventuelle à entreprendre.

Selon un autre aspect de l'invention, commun aux deux modes de réalisation présentés, le dispositif 10 est en outre équipé d'un capteur GPS pour enregistrer, via le système de pilotage, en conjonction avec la prise clichés, la position géographique de chacun de ces clichés.

Selon un autre aspect de l'invention, le dispositif 10 et en particulier le propulseur 3 est en outre équipé de moyens de propulsion à vitesse réglable, grâce auxquels la vitesse d'avancement du dispositif est réglable. Un actuateur de contrôle (non représenté) manoeuvré par le plongeur 90 lui permet d'ajuster la vitesse d'avancement du dispositif, notamment en relation avec la périodicité de prise des clichés.

Selon un autre aspect de l'invention, le dispositif 10 comprend une unité de déclenchement (non représentée) adaptée pour déclencher la prise de clichés automatiquement selon une chronologie prédéterminée ou à intervalles de temps réguliers.

## Revendications

1. Dispositif sous-marin (10) de propulsion et de capture d'images d'un fond sous-marin, ledit dispositif comprenant :
- un propulseur hydrodynamique (3) muni de poignées (39) adaptées pour recevoir les mains d'un plongeur (90), le propulseur étant adapté pour propulser le dispositif selon un axe de propulsion,
- un support (2;2') lié à une portion inférieure dudit propulseur hydrodynamique, décalé de l'axe de propulsion,
- un appareil de capture d'images (4;7) fixé au dit support, ayant un champ de capture dirigé vers le fond sous-marin en position normale d'utilisation,
**caractérisé en ce que** ledit support est équipé d'au moins deux générateurs de faisceau lasers (5;5') dirigés vers le champ de capture dudit appareil photo/vidéo, chaque générateur étant adapté pour générer un rayon laser (51;53,54) produisant une tache lumineuse sur le fond sous-marin, et **en ce que** les au moins deux générateurs de faisceau laser (5) émettent des rayons lasers (51) parallèles entre eux espacés d'une distance prédéterminée.

2. Dispositif selon la revendication 1, dans lequel le support (2) comprend une base (2') fixée solidairement au propulseur hydrodynamique (3), et un cadre auxiliaire (6) inclinable supporté par la base (2') et articulé par rapport à ladite base (2'), dans lequel un second appareil de capture d'images (7) est fixé sur le cadre auxiliaire inclinable (6).

3. Dispositif selon l'une quelconque des revendications 1 à 2, comportant quatre générateurs de faisceau laser (5).

4. Dispositif selon la revendication 3, dans lequel au moins deux des générateurs de faisceau laser (5') émettent des faisceaux lasers (54,55) convergents vers le bas, espacés angulairement d'un angle prédéterminé β, pour se croiser à une distance prédéterminée h du support (2).

5. Dispositif selon l'une quelconque des revendications précédentes, dans lequel les rayons laser ont des couleurs différentes.

6. Dispositif selon l'une quelconque des revendications précédentes, dans lequel les taches lumineuses ont des formes différentes.

7. Dispositif selon l'une quelconque des revendications précédentes, comprenant des moyens de propulsion à vitesse réglable et dans lequel la vitesse d'avancement du dispositif est réglable au moyen d'un actuateur de contrôle.

8. Dispositif selon l'une quelconque des revendications précédentes, comprenant une unité de mesure de position GPS.

9. Dispositif selon l'une quelconque des revendications précédentes, comprenant une unité de déclenchement adaptée pour déclencher la prise de clichés automatiquement selon une chronologie prédéterminée ou à intervalles de temps réguliers.

## Patentansprüche

1. Unterwasservorrichtung (10) zum Antreiben und zum Erfassen von Bildern eines Unterwasserbodens, wobei die Vorrichtung aufweist:
- eine hydrodynamische Antriebseinrichtung (3), die mit geeigneten Griffen (39) zur Aufnahme der Hände eines Tauchers (90) versehen ist, wobei die Antriebseinrichtung fähig ist, die Vorrichtung entlang einer Vortriebsachse anzutreiben,
- einen Träger (2,2'), der in einem Abstand von der Vortriebsachse an einem unteren Abschnitt der hydrodynamischen Antriebseinrichtung angebracht ist,
- ein an dem Träger befestigtes Bilderfassungsgerät (4;7), dessen Erfassungsfeld in der normalen Verwendungsposition zum Unterwasserboden gerichtet ist,
**dadurch gekennzeichnet, dass** der Träger mit mindestens zwei Laserstrahlgeneratoren (5;5') zum Erzeugen von Laserstrahlen in Richtung des Erfassungsfelds des Foto/Video-Geräts versehen ist, wobei jeder Generator fähig ist, einen Laserstrahl (51;53;54) zu erzeugen, der auf dem Unterwasserboden einen Lichtfleck erzeugt, und dass die mindestens zwei Laserstrahlgeneratoren (5) Laserstrahlen (51) aussenden, die parallel zueinander sind und einen vorgegebenen Abstand voneinander haben.

2. Vorrichtung nach Anspruch 1, in welcher der Träger (2) eine an der hydrodynamischen Antriebseinrichtung (3) fest angebrachte Basis (2') und einen Hilfsrahmen (6) aufweist, der von der Basis (2') gehalten wird und bezüglich der Basis (2') schwenkbar ist, wobei an dem schwenkbaren Rahmen (6) ein zweites Bilderfassungsgerät (7) befestigt ist.

3. Vorrichtung nach einem der Ansprüche 1 bis 2, mit vier Laserstrahlgeneratoren (5).

4. Vorrichtung nach Anspruch 3, in welcher mindestens zwei der Laserstrahlgeneratoren (5') beabstandete Laserstrahlen (54,55) aussenden, die sich nach unten hin in einem vorgegebenen Winkel β einander nähern, um sich in einem vorgegebenen Abstand h von dem Träger (2) zu kreuzen.

5. Vorrichtung nach einem der vorstehenden Ansprüche, in welcher die Laserstrahlen unterschiedliche Farben haben.

6. Vorrichtung nach einem der vorstehenden Ansprüche, in welcher die Lichtflecke von unterschiedlicher Gestalt sind.

7. Vorrichtung nach einem der vorstehenden Ansprüche, mit Antriebsmitteln, deren Geschwindigkeit steuerbar ist, wobei die Vortriebsgeschwindigkeit der Vorrichtung mit Hilfe eines Steueraktuators steuerbar ist.

8. Vorrichtung nach einem der vorstehenden Ansprüche, mit einer GPS-Positionsmesseinheit.

9. Vorrichtung nach einem der vorstehenden Ansprüche, mit einer Auslöseeinheit zum automatischen Auslösen der Aufnahme von Bildern gemäß einem vorgegebenen Zeitablauf oder in regelmäßigen Zeitintervallen.

## Claims

1. Underwater propulsion device (10) for capturing images of an underwater bed, said device comprising:
- a hydrodynamic propeller (3) fitted with handles (39) designed to accommodate the hands of a diver (90), the propeller being designed to propel the device along a propulsion axis,
- a support (2; 2') connected to a bottom portion of said hydrodynamic propeller offset from the propulsion axis,
- an image capturing apparatus (4; 7) affixed to said support, having a capture field directed towards the underwater bed in the normal usage position,
**characterised in that** said support is equipped with at least two laser beam generators (5; 5') directed towards the capture field of said photographic/video apparatus, each generator being configured to generate a laser beam (51; 53, 54) creating a light spot on the underwater bed, and **in that** the at least two laser beam generators (5) emit mutually parallel laser beams (51) spaced at a predetermined distance apart.

2. Device as claimed in claim 1, in which the support (2) comprises a base (2') fixedly attached to the hydrodynamic propeller (3) and an inclinable auxiliary frame (6) supported by the base (2') and articulated relative to said base (2'), in which a second image capturing apparatus (7) is affixed to said inclinable auxiliary frame (6).

3. Device as claimed in any one of claims 1 to 2, comprising four laser beam generators (5).

4. Device as claimed in claim 3, in which at least two of the laser beam generators (5') emit downwardly converging laser beams (54, 55) angularly spaced at a predetermined angle β so as to cross at a predetermined distance h from the support (2).

5. Device as claimed in any one of the preceding claims, in which the laser beams are of different colours.

6. Device as claimed in any one of the preceding claims, in which the light spots are of different shapes.

7. Device as claimed in any one of the preceding claims, having propulsion means of which the speed can be regulated and in which the forward speed of the device can be regulated by means of a control actuator.

8. Device as claimed in any one of the preceding claims, having a unit for measuring GPS position.

9. Device as claimed in any one of the preceding claims, having a trigger unit configured to trigger the capture of images automatically based on a predetermined chronology or at regular time intervals.
